# EUROPÄISCHE PATENTSCHRIFT

(11) **EP 0 759 698 B1**
(45) Veröffentlichungstag und Bekanntmachung des Hinweises auf die Patenterteilung: **13.08.1997**
(21) Anmeldenummer: 95913169.9
(22) Anmeldetag: 30.03.1995
(51) Int. Cl.: A23B 4/027, A23B 4/12

(54) **MITTEL ZUR STEIGERUNG DER HALTBARKEIT VON SCHLACHTTIERKÖRPERN**
AGENT FOR INCREASING THE KEEPING QUALITY OF SLAUGHTERED-ANIMAL CARCASSES
AGENT PERMETTANT D'AUGMENTER LA CONSERVABILITE DE CORPS D'ANIMAUX D'ABATTOIR

(30) Priorität: 09.06.1994 DE 4420127
(43) Veröffentlichungstag der Anmeldung: 05.03.1997
(73) Patentinhaber: Stemmler, Heinz, Jr., D-50668 Köln (DE); Stolle, Andreas, 85386 Eching (DE); Liebich, Hans-Georg, D-80802 München (DE)
(72) Erfinder: Stemmler, Heinz, Jr., D-50668 Köln (DE); Stolle, Andreas, 85386 Eching (DE); Liebich, Hans-Georg, D-80802 München (DE)
(74) Vertreter: Weber, Thomas, Dr.Dipl.-Chem.
(86) Internationale Anmeldenummer: EP9501180
(87) Internationale Veröffentlichungsnummer: WO9533383

(56) Entgegenhaltungen:
- DE-A- 3 234 194
- GB-A- 696 617
- US-A- 3 743 519
- US-A- 3 782 975
- US-A- 4 267 198

## Beschreibung

Die Erfindung betrifft ein Mittel zur Steigerung der Haltbarkeit von Schlachttierkörpern und Schlachttierkörperteilen sowie Verfahren zu dessen Anwendung.

Die seit vielen Jahrzehnten versuchsweise in einigen Ländern eingesetzten Verfahren zur Reduzierung des Oberflächenkeimgehaltes bei Schlachttierkörpern und Teilstücken zeigten nur eingeschränkten Erfolg.

Diese Verfahren bewirkten eine irreversible Verfärbung der Fleischoberfläche und eine beim Verzehr feststellbare Festigkeit des Fleisches. Bakteriologische Untersuchungen zeigten, daß eine deutliche Keimreduzierung nur in bestimmten Oberflächenarealen nachweisbar war. Somit erwiesen sich diese Verfahren für die weitere Verarbeitung und den Verzehr als höchst ungeeignet. Völlig offen blieb die Frage einer selektiven Wachstumsförderung säuretoleranter Keimgruppen. Ausschließlicher Einsatz organischer Genußsäuren führt zudem zu einer übermäßigen Säuerung des Fleisches, d.h. sie kumulieren als Rückstände auf der Fleischoberfläche. Die bisher angewandten Verfahren beruhen allein auf der Verwendung von Mischungen organischer Genußsäuren oder von Halogenen zum Einsprühen oder Eintauchen in Trinkwasser. Da die genannten Verfahren die aufgezeigten hygienischen und substantiellen Nachteile aufweisen und keine geeigneten anderen Verfahren bekannt sind, besteht ein dringendes Bedürfnis an neuartigen Erzeugnissen bzw. Verfahren.

Die bisher angewandten Verfahren beruhen allein auf der Verwendung von Mischungen organischer Genußsäuren oder von Halogenen zum Einsprühen oder Eintauchen in Trinkwasser.

GB-A-696 617 beschreibt ein Mittel bestehend aus einem Gemisch anorganischer Phosphate (Natrium und/oder Kaliumsalze), wobei dem Phosphatgemisch zusätzlich Zitronensäure, Weinsäure oder Adipinsäure zugesetzt sein können.

DE-A-32 34 194 offenbart eine Lösung aus einer Kombination von Essigsäure und wenigstens einer weiteren Genußsäure, die ausgewählt ist aus Milchsäure, Zitronensäure und Ascorbinsäure zur Behandlung von Schlachttierkörpern.

US-A-3,782,975 beschreibt wässrige Lösungen zur Behandlung von Fleisch, die anorganische Phosphate, Zucker und Isoascorbinsäure neben Nitraten und Nitriten enthalten.

Aufgabe der Erfindung ist daher, die Bereitstellung eines Mittels zur Behandlung von Schlachttieren oder Schlachttierteilen, welches eine Steigerung der Haltbarkeit dieser bewirkt. Damit soll sichergestellt sein, daß die Eiweißreserven von Schlachttieren vollständig ausgenutzt werden. Das Mittel soll biologisch wirksam sein und ferner zu keiner Rückstandsproblematik führen.

Darüberhinaus sollte ein wirksames Verfahren zur Behandlung der Schlachttierkörper mit diesem Mittel zur Verfügung gestellt werden.

Diese Aufgabe wurde erfindungsgemäß gelöst durch ein Mittel zur Steigerung der Haltbarkeit von Schlachttierkörperteilen umfassend eine wässrige Lösung von
(a) 0,1 bis 5,0 Gew.-% einer Wirkstoffstammzusammensetzung umfassend als Bestandteile wenigstens einen Zucker, wenigstens ein anorganisches Phosphat, wenigstens eine Verbindung, die ausgewählt ist aus Ascorbinsäure oder Isoascorbinsäure oder deren anorganischen Salzen, Zitronensäure, Sorbinsäure oder deren Gemischen und
(b) 0,1 bis 5,0 Gew.-% eines Aktivators, der ausgewählt ist aus Essig- und Milchsäure.
jeweils bezogen auf die Gesamtmenge der wässrigen Lösung.

Als anorganische Salze der Ascorbinsäure und Isoascorbinsäure sind insbesondere das Natrium-, Kalium und das Calcium-Salz zu nennen.

Der Lösung der Aufgabe liegt die Erkenntnis eines oberflächenaktiven Schutzmechanismus zugrunde, wie durch Untersuchungen an Schlachttieren (Rinder, Schweine) und an Geflügel nach oberflächlicher Applikation der Gebrauchslösung nachgewiesen. Darüberhinaus haben weitere Untersuchungen an Teilstücken und Organen von Rindern und Schweinen mit dem erfindungsgemäßen Mittel tendenziell zu einer Verbesserung der Haltbarkeit und der Ausblutung geführt.

Die Kombination der Wirkstoffstammzusammensetzung mit dem Aktivator in dem erfindungsgemäßen Mittel bewirkt eine weitere deutliche Verbesserung der geprüften Parameter.

Es war nicht zu erwarten, daß die Wirkstoffstammzusammensetzung in Kombination mit einer oder mehreren Aktivatoren den hier beschriebenen positiven Einfluß auf die Oberfläche der Schlachttierkörper bzw. Teilstücke bewirken. Die Untersuchungen zeigten jedoch überraschenderweise einen völlig neuen Aspekt der Anwendung beider Lösungen in kumulativer Hemmung ("Hürdeneffekt").

Die verbesserte Haltbarkeit der Schlachttierkörper beruht auf einer Interaktion der Wirkstoffstammzusammensetzung und dem Aktivator des erfindungsgemäßen Mittels mit der Mikroflora der Fleischoberfläche und der fleischspezifischen Inhaltsstoffe. Dieses Phänomen läßt sich dadurch erklären, daß Mikroorganismen aufgrund des sogenannten "Intrinsicfactors" in ihrem Wachstum gehemmt werden. Dies beginnt mit der pH-Wert-Reduzierung einseitiger Zuckerverfügbarkeit, die zu einer Verminderung der Generationszeit von Mikroorganismen mit all ihren Effekten führt.

Die Entdeckung dieses oberflächenaktiven Schutzmechanismus zur Hemmung der mikrobiellen Vermehrungsfunktion bedeutet einen neuen wichtigen Beitrag, um wirksam die Haltbarkeit von Schlachttierkörpern und Teilstücken zu steuern. Eine Verbesserung dieser Haltbarkeit des Fleisches ist von größter Wichtigkeit für die Ernährung des Menschen und die Erhaltung der Gesundheit.

Dieser Mechanismus bedient sich physiologischer Prozesse. Er ist "biologisch". Seine Wirksamkeit wurde in Untersuchungen unter ökonomisch relevanten Bedingungen nachgewiesen.

Besonders bevorzugt enthält das erfindungsgemäße Mittel die Wirkstoffstammzusammensetzung in einem Anteil von 0,1 bis 2,5 Gew.-% und den Aktivator in einem Anteil von 0,1 bis 2,5 Gew.-%, jeweils bezogen auf die Gesamtmenge der wässrigen Lösung.

Dem erfindungsgemäßen Mittel können ferner noch übliche Hilf- und/oder Zusatzstofe zugesetzt werden. Diese werden in Anteilen von bis zu 20 Gew.-%, vorzugsweise bis zu 10 Gew.-% zugesetzt. Als Hilfs oder Zusatzstoffe kommen insbesondere bekannte wasserlösliche Quellstoffe (Verdickungsmittel) auf pflanzlicher oder tierischer Basis (verleimtes, kollagenes Eiweiß, tierische Gelatine, Phosphoproteide, Kaseine) in Frage.

Als Zucker für die Wirkstoffstammzusammensetzung kommen insbesondere Mono- und Oligosaccharide in Frage. Bevorzugt sind Glucose (Dextrose), Galactose, Mannose, Fructose, Arabinose, Xylose, Ribose, Maltose, Maltotriose, Trehalose, Sucrose, Stachylose, Raffinose, Lactose oder deren Gemische. Besonders bevorzugt ist ein Gemisch aus Dextrose, Oligosacchariden, Maltose und Maltotriose.

Als Phosphate für die Wirkstoffstammzusammensetzung kommen insbesondere Alkalimetall-di- und polyphosphate in Frage. Bevorzugt sind Alkalimetalltripolyphosphat und insbesondere dessen Natriumsalz, Alkalimetallpolymetaphosphat und insbesondere dessen Kaliumsalz sowie Tetralkalimetalldiphosphat und insbesondere das Kaliumsalz. Im Rahmen der vorliegenden Erfindung kommen insbesondere kondensierte Natriumphosphate und/oder kondensierte Kaliumphosphate, wie
- Natriumdiphosphate, z.B. Dinatriumdihydrogenphosphat, Tetranatriumdiphosphat;
- Natriumtripolyphosphat;
- höher kondensierte Natriumpolyphosphate, z.B. Natrium hexametaphosphat, Hexanatriumtetraphosphat (Grahamsches Salz);
- Tetrakaliumdiphosphat;
- Kaliumtripolyphosphat;
- Kurrolsches Salz (hochmolekulares Kaliumpolyphosphat (KPO₃)ₙ) in Frage. Besonders bevorzugt ist ein Gemisch von Natriumtripolyphosphat, Kaliumpolymetaphosphat und Tetrakaliumdiphosphat.

Die Wirkstoffstammzusammensetzung kann ferner Acetoglyceride enthalten. Dabei handelt es sich um Monoacetyl- und/oder Diacetylglyceriden auf Basis von tierischen oder pflanzlichen Ölen oder Fetten.

Die Wirkstoffstammzusammensetzung ist dadurch gekennzeichnet, daß sie zusammengesetzt ist aus 40 bis 70 Gew.-Teilen Zucker, 15 bis 35 Gew.-Teilen anorganischem Phosphat und 0,5 bis 10 Gew.-Teilen der Verbindung, die ausgewählt ist aus Ascorbinsäure oder Isoascorbinsäure oder deren anorganischen Salzen, Zitronensäure, Sorbinsäure oder deren Gemischen. Der Anteil des Monoacetylglycerids und/oder Diacetylglycerids beträgt 0,1 bis 3 Gew.-Teile.

Besonders bevorzugt ist eine Wirkstoffstammzusammensetzung, deren gelöste Bestandteile sich zusammensetzen aus
49,1 Gew.-Teilen Dextrose,
9,5 Gew.-Teilen Oligosaccharide,
5,1 Gew.-Teilen Maltose,
3,9 Gew.-Teilen Maltotriose,
23,0 Gew.-Teilen Natriumtripolyphosphat,
2,9 Gew.-Teilen Kaliumpolymetaphosphat,
2,9 Gew.-Teilen Tetrakaliumdiphosphat,
2,5 Gew.-Teilen Ascorbinsäure,
0,5 Gew.-Teilen Zitronensäure,
0,5 Gew.-Teilen Acetoglyceriden.

Als Aktivator im Rahmen der vorliegenden Erfindung besonders bevorzugt ist Milchsäure. Die Herstellung des erfindungsgemäßen Mittels kann so erfolgen, daß man die Wirkstoffstammzusammensetzung und den Aktivator in solchen Mengen in Wasser löst, daß sich die gewünschten Konzentrationen einstellen. Es ist aber auch möglich, die Wirkstoffstammzusammensetzung und den Aktivator als getrennte wässrige Lösungen bereitzustellen, die dann zur Herstellung der gebrauchsfertigen Anwendungslösung so miteinander gemischt werden, daß sich die entsprechenden erfindungsgemäßen Konzentrationen einstellen. Zu der Lösung aus Wirkstoffstammzusammensetzung und Aktivator können dann gegebenenfalls notwendige Hilfs- oder Zusatzstoffe zugegeben werden.

Die resultierende wässrige Lösung kann nun zur postmortalen Behandlung der Schlachttierkörper oder Körperteile eingesetzt werden. Hierzu werden die Körper oder Körperteile mit der Lösung ganz oder teilweise besprüht oder ganz oder teilweise darin eingetaucht (gedippt). Die Lösung kann auch intravasal in Teilstücke injiziert werden. Die Lösung kann auch durch geeignete Zusatzstoffe in ein Gel verwandelt und als solches auf die innere und/oder äußere Oberfläche der Schlachttierkörper oder Körperteile aufgetragen werden.

Das erfindungsgemäße Mittel eignet sich besonders gut zur Steigerung der Haltbarkeit von Körpern oder Körperteilen von monogastrischen Tieren, Tieren mit Zelluloseverdauung im Pansen und Geflügel und Speisefisch. Praktische Anwendung findet das erfindungsgemäße Mittel insbesondere bei der postmortalen Behandlung von Rind, Kalb, Schwein, Lamm, Huhn, Hahn, Ente, Pute, Wild und Speisefisch. Darüberhinaus kann das erfindungsgemäße Mittel auch eingesetzt werden zum Behandeln von Gehacktem von Rind-, Kalb-, Schwein und Geflügelfleisch. Insbesondere Rinder-, Kalbs- und Schweinegehacktes findet verbreitete Anwendung bei der Herstellung von "Hamburger Petties". Diese werden in großem Maßstab vorgefertigt (gewürzt, portioniert) und so an Fastfood-Restaurants geliefert, wo sie genußfertig gemacht werden. Es versteht sich von selbst, daß es auch hier auf eine erhöhte Haltbarkeit ankommt. Das gehackte bzw. durch den Fleischwolf gedrehte Fleisch wird hierzu mit einer entsprechenden Menge des erfindungsgemäßen Mittels angeteigt oder die fertigen vorgefertigten Petties an der Oberfläche damit besprüht. Dementsprechend betrifft die vorliegende Erfindung auch Schlachttierkörper und Schlachttierkörperteile, die erhältlich sind durch die oben beschriebene postmortale Behandlung der Körper und Körperteile und ferner derartige mit dem erfindungsgemäße Mittel behandelten "Hamburger Petties".

Die Steigerung der Haltbarkeit von Schlachttierkörpern und Teilstücken durch die Anwendung des erfindungsgemäßen Mittels beträgt leicht erreichbar einige Zehnerpotenzen KbE/cm² (koloniebildende Einheit, Zahlenangabe für Mikroorganismen auf Oberflächen), wie nachfolgend gezeigt wird. Gleichzeitig erfolgt insbesondere beim Geflügel im Rahmen der küchenmäßigen Zubereitung eine deutliche Verbesserung der gustatorischen Eigenschaften durch Steigerung des Bräunungsgrades und der Fritiereigenschaften.

Die nachfolgenden Beispiele erläutern die Erfindung.

### Beispiele:

In den nachfolgenden Beispielen wurde jeweils eine Stammlösung eingesetzt, die 1 Gew.-% einer Wirkstoffstammzusammensetzung enthielt aus
49,1 Gew.-Teilen Dextrose,
9,5 Gew.-Teilen Oligosaccharide,
5,1 Gew.-Teilen Maltose
3,9 Gew.-Teilen Maltotriose,
23,0 Gew.-Teilen Natriumtripolyphosphat
2,9 Gew.-Teilen Kaliumpolymetaphosphat
2,9 Gew.-Teilen Tetrakaliumdiphosphat
2,5 Gew.-Teilen Ascorbinsäure (Vitamin C)
0,5 Gew.-Teilen Zitronensäure
0,5 Gew.-Teilen Acetoglyceriden.

Zu dieser Stammlösung wurde Milchsäure in verschiedenen, nachfolgend im Einzelfall angegebenen Konzentrationen zugegeben. Als Wasser wurde Trinkwasser verwendet.

Die Farbmessung der Farbwerte L, a und b erfolgte mit dem Chromameter (Fa. Minolta) vor der Behandlung (0-Wert), am selben Tag nach der Behandlung (Tag 1) sowie am 2. und 3. Tag.

Die Messung des pH-Wertes wurde mit dem pH-Meter "PHK 21" (Fa. NWK) mit einer speziellen Einstab-MultidiaphragmaGlaselektrode zu den bereits erwähnten Zeitpunkten am Musculus longissimus dorsi und am Musculus pectoralis profundus durchgeführt.

**Tabelle 1**

| Untersuchungen an der Muskulatur vom Schwein ohne bzw. nach Besprühen mit einer Gebrauchslösung enthaltend 1 Gew.-% Wirkstoffstammzusammensetzung und 2 Gew.-% Milchsäure | | | |
|---|---|---|---|
| | | Untersuchung der Farbe | Untersuchung des pH-Wertes |
| Muskelanschnittsflächen | M. subclavius | x | |
| | M. teres major | x | |
| | M. longissimus dorsi | x | x |
| | M. pectoralis profundus | x | x |
| Muskeln mit Faszienabdeckung | M. supraspinatus | x | |
| | M. subscapularis | x | |
| Fett- und Bindegewebe | | x | |

### Untersuchungen an Teilstücken vom Schwein nach Besprühen mit der Gebrauchslösung

In einer ersten Untersuchungsreihe kam die Gebrauchslösung aus der Stammlösung unter Zusatz von 2 Gew.-% Milchsäure an Schweineschultern zur Anwendung. Es wurde der Einfluß des Besprühens auf die Farbe und den pH-Wert der Muskulatur vom Schwein untersucht.

Die Sprühlösung (SL) bestand aus Stammlösung enthaltend 2 Gew.-% Milchsäure. Untersuchungen der Farbe und des pH-Wertes fanden vor sowie bis zum dritten Tag nach der Behandlung statt. Die Farbwerte L, a und b wurden an Muskelanschnittsflächen, an faszienbedeckten Muskeln sowie am Fett- und Bindegewebe ermittelt, die pH-Messungen erfolgten an Muskelanschnittsflächen. Zur Untersuchung wurden taugliche Schweineschultern auf eine Kerntemperatur von +7°C gekühlt. Der Ansatz der Sprühlösung (SL) erfolgte mit Leitungswasser, der pH-Wert der SL lag bei 2,7 bis 2,8. Das Besprühen von Schweineschultern (n=30) der Versuchsgruppe mit der SL erfolgte mittels eines Spritzgerätes mit einem Druck von 0,8 bar für 30 Sekunden. Die übrigen Schweineschultern (Kontrollgruppe n = 30) erfuhren eine entsprechende Sprühbehandlung mit Leitungswasser. Die Schweineschultern lagerten, in Plastikbeuteln verpackt, bei Temperaturen von +2°C bis +4°C.

### Ergebnisse

Während der Lagerung floß aus den Axillargefäßen der Kontrolle Blut aus und verschmierte das umgebende Binde- und Fettgewebe. Bei den behandelten Schultern dagegen blieben Blutreste weitgehend auf die Stellen beschränkt, wo sie vor der Behandlung waren und das umgebende Gewebe blieb entsprechend heller.

Die Muskelanschnittsflächen wiesen Farbhelligkeitswerte (L-Werte) zwischen 40 und 5 auf. Unter Berücksichtigung der Farbe vor Behandlung ergab sich nach Besprühen der Schultern mit der Lösung ein Ansteigen der L-Werte und damit eine Aufhellung. Bei den Kontrollen war fast immer eine Abnahme der L-Werte zu beobachten (Tabelle 2). Mit der Aufhellung der behandelten Teilstücke ging meistens eine Abnahme der Buntheit einher. Der a-Wert als Maß für die Intensität der Rotanteile sank, während dieser bei den Kontrollen anstieg. Bei den Kontrollen war weiterhin ein stärkeres Ansteigen der b-Werte (Gelbanteil) als bei den behandelten Tieren zu beobachten (Tabelle 2).

Die L-Werte der Muskeln mit Faszienabdeckung lagen um 60 und damit höher als bei den Muskelanschnittsflächen. Die L-, a- und b-Werte veränderten sich im wesentlichen ähnlich wie bei den Muskelanschnittsflächen, wobei Unterschiede zwischen den beiden untersuchten Muskeln bestanden. Im Gegensatz zu den meisten Muskelanschnittsflächen kam es bei den faszienbedeckten Muskeln der behandelten Teile am 2. und 3. Tag zu einem stärkeren Ansteigen der b-Werte (Gelbanteile) als bei den Kontrollen (Tabelle 2).

Das Fett- und Bindegewebe wies die höchsten L-Werte (um 70) auf. Es dunkelte während der Lagerung ab. Bei den Kontrollen war dieser Effekt deutlicher ausgeprägt als in der Versuchsgruppe (Tabelle 2).

Der pH-Wert lag bei den späteren Kontroll- wie auch Versuchsstücken vor Behandlung auf dem M. pectoralis profundus im Mittel bei 5,6, auf dem M. longissimus dorsi bei 5,7. Durch das Besprühen mit der Lösung kam es zu einem signifikanten pH-Wert-Abfall um 0,43 bzw. 0,48 Einheiten am 1. Tag. Am 2. Tag war der Unterschied gegenüber der Kontrollgruppe mit 0,17 Einheiten auf dem M. longissimus dorsi noch signifikant (Tabelle 3).

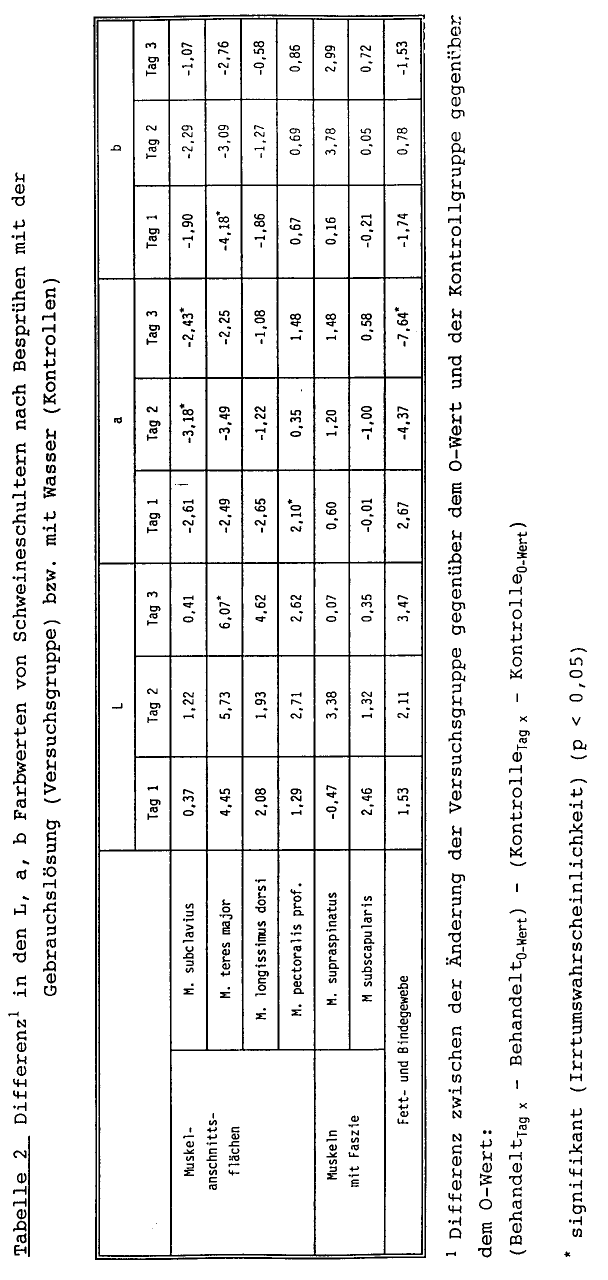

Durch das Besprühen von Schweineschultern mit einer Lösung aus Stammlösung enthaltend 2 Gew.-% Milchsäure kam es durch den niedrigen pH-Wert der Sprühlösung zu einer Absenkung des pH-Wertes auf der Fleischoberfläche. Dies ist im Hinblick auf eine eventuelle Reduktion des Oberflächenkeimgehaltes als günstig zu betrachten. Auch das verminderte Austreten von Blutresten auf die Fleischoberfläche wird auf das Aufbringen der SL mit dem niedrigen pH-Wert zurückgeführt. Dies ist abgesehen von einem ansprechenderen Aussehen der behandelten Teile auch in mikrobiologischer Hinsicht vorteilhaft, da Blut ein günstiges Nährmedium für Keime darstellt.

**Tabelle 3**

| Differenzen im pH-Wert zwischen der Versuchs- und der Kontrollgruppe nach dem Besprühen mit Stammlösung enthaltend 1 Gew.- % Milchsäure bzw. Wasser | | |
|---|---|---|
| Tag | Differenz (Versuchsgruppe - Kontrollen) | |
| | M. longissimus dorsi | M. pectoralis prof. |
| 1 | -0,48* | -0,43* |
| 2 | -0,17* | -0,13 |
| 3 | -0,08 | -0,03 |

| | | |
|---|---|---|
| * signifikant (p < 0,05) | | |

### Untersuchungen an Hähnchen nach Besprühung mit der Gebrauchslösung

### 1. Ablauf der Versuche:

In einer zweiten Untersuchungsreihe wurde die Anwendung von zwei Oberflächenbehandlungsverfahren bei Hähnchen getestet. Die Hähnchen wurden im Sprüh- oder Dippverfahren behandelt, die Behandlung kann aber auch intravasal injiziert werden. Als Ausgangsmaterial für die Sprühlösung (SL), Dipplösung (DL) und Injektionslösung (IL) diente die beschriebene Gebrauchslösung.

Die Dipp- und die Sprühlösung wurden vor und nach der Behandlung der Tiere mikrobiologisch untersucht.

Das Untersuchungsmaterial bestand aus 56 Hähnchen in 2 Untersuchungsphasen. 36 Tiere wurden in DL bzw. mit SL (behandelte Tiere), 20 Kontrolltiere in Wasser gedippt bzw. damit besprüht. Beim Dippverfahren tauchte die Karkasse in der Lösung ein, beim Sprühverfahren erfolgte die Behandlung der äußeren wie inneren Körperoberfläche der Hähnchen.

Es fanden Messungen der Temperatur, der Farbe und des pH-Wertes, die Bestimmung des Wassergehaltes sowie mikrobiologische, sensorische und histologische Untersuchungen an den in Tabelle 4 angegebenen Tagen statt.

**Tabelle 4**

| Untersuchungen an "Hähnchen" nach Behandlung der Hautoberflächen mit Stammlösung enthaltend 1 Gew.-% Milchsäure | | | | |
|---|---|---|---|---|
| Untersuchung | Untersuchungstage | | | |
| | 1 | 2 | 4 | 8 |
| Temperatur | x | x | x | x |
| Farbe | x | x | x | x |
| pH-Wert | x | x | x | x |
| MFF | x | | | x |
| Sensorik | | x | | x |
| Mikrobiologie | x | | | x |
| Histologie | x | | | x |

### 2. Probenmaterial und Methoden:

Die Hähnchen stammten aus einer Geflügelmästerei und - schlachterei. Es handelt sich um Tiere aus Bodenhaltung. Das Schlachtalter betrug 7 Wochen, das Schlachtgewicht 1,3 bis 2,2 kg. Bei der Zuordnung zu den verschiedenen Untersuchungsgruppen wurde auf Vergleichbarkeit des Gewichts geachtet.

### Lösungen, Behandlung der Tierkörper, Lagerung und Desinfektion

Die Sprühlösung (SL) bestand aus Stammlösung sowie 1 Gew.-% Milchsäure. Die Dipplösung (DL) war die Stammlösung mit Zusatz von 0,2 Gew.-% Milchsäure. Wegen der gegenüber der Sprühlösung verlängerten Einwirkzeit beim Dippen war die Milchsäurekonzentration in der DL reduziert, um eine Aufhellung der Karkassen zu verhindern.

Zum Besprühen diente ein Spritzgerät. Der Sprühdruck betrug 0,8 bar, die Durchflußmenge 6 l/min und die Sprühdauer 30 sec. Das Dippen erfolgte für 30 min in 40 l Flüssigkeit in Gruppen von max. 5 Tieren.

Die Tiere lagerten in (sterilen) Plastikbeuteln in einem Kühlschrank bei Lufttemperaturen von maximal +2 °C bis zum 8. Tag.

### Chemische Bestimmung des Wassergehaltes auf fettfreier Basis

Zur Bestimmung des Wassergehaltes auf fettfreier Basis (MFF) wurde am 1. Tag die Haut des linken, am 8. Tage die des rechten Schenkels untersucht. Der Wassergehalt wurde nach L06.00-3 der Amtlichen Sammlung von Untersuchungsverfahren nach § 35 LMBG ermittelt. Die Fettgehaltsbestimmung erfolgte mittels Dichlormethan als Extraktionsmittel in Anlehnung an L06.00-6.

### Biophysikalische Untersuchungen

Die Temperatur wurde vor und nach der Behandlung subkutan und intramuskulär im Bereich der Brusthaut bzw. Der Brustmuskulatur sowie während der Lagerphase intramuskulär gemessen (Brustmuskulatur).

Die Farbmessung erfolgte an 5 Punkten: an der Brusthaut der linken Körperhälfte, der Bauchwand der rechten Körperhälfte, an der Haut des Rückens vor dem Ansatz des rechten Flügels, an der Rückenhaut oberhalb des linken Schenkels und am linken Unterschenkel.

Der pH-Wert der Haut und der Muskulatur wurde in 4 Regionen bestimmt: An der rechten und linken Brustseite sowie hinter dem Brustbein (nur Haut) bzw. der linken Oberschenkelmuskulatur.

### Sensorische Untersuchung

Für die sensorische Untersuchung wurden die Hähnchen paarweise bei +140 °C fritiert. Die Zubereitungszeit betrug 30-40 min.

### Mikrobiologische Untersuchung

Zur Bestimmung des Keimgehalts der äußeren und inneren Körperoberfläche wurden jeweils 20 cm² Schenkel- und Brusthaut sowie 20 cm² Serosa im Bauchwand- und Kloakenbereich entnommen. Die Schenkel- und Brusthaut wurde als Poolprobe bearbeitet. Entsprechendes gilt für die Probenahme für die Salmonellenanreicherung.

Die quantitative Keimbestimmung erstreckte sich auf die aerobe, mesophile Gesamtkeimzahl (L 06.00-19 der Amtlichen Sammlung von Untersuchungsverfahren nach § 35 LMBG), Enterobakteriazeen (L 06.00-25) und Staphylokokken sowie St. aureus (Baird Parker Agar, serologische Bestätigung von St. aureus mittels Staphyslide®, BioMerieux).

Für den Nachweis von Salmonellen fanden die in L 00.00-20 der Amtlichen Sammlung von Untersuchungsverfahren nach § 35 LMBG vorgeschriebenen Medien Verwendung. Die Ausstriche erfolgten auf BPLS und MLCB-Agar. Zur serologischen und biochemischen Bestätigung wurden Salmonellentestserum (Omnivalent, Behring) und ein miniaturisiertes Fertigtestbesteck (Enterotube®, Hoffmann - La Roche) verwendet.

### Histologische Untersuchung

Die histologische Untersuchung erstreckte sich auf die Gewebe der äußeren und inneren Körperoberfläche (Haut bzw. Serosa) und die darunter befindliche Muskulatur. Die Proben wurden am Unterschenkel (Haut mit Muskulatur) sowie aus der Bauchwand entnommen (Haut - Muskulatur - Serosa).

### 3. Ergebnisse

### 3.1. Dipp- und Sprühlösung

Der pH-Wert der Dipplösung lag bei 5,1 bzw. 5,2. Die höhere Konzentration an Milchsäure in der Sprühlösung führte zu pH-Werten von 3,0 und 3,1. Die Temperatur der Lösungen betrug bei der Anwendung 13,7 bis 15,4 °C. Der Keimgehalt der Ausgangslösungen lag maximal bei 4,5 x 10¹ KbE/ml.

### 3.2. Wassergehalt auf fettfreier Basis (MFF)

Am 1. Tag betrug der Wassergehalt auf fettfreier Basis bei allen Untersuchungsgruppen zwischen 84,8 und 85,8% (Mittelwerte). Am 8. Tag betrug der MFF-Wert 81,0 bis 81,9%. Es bestanden keine signifikanten Unterschiede zwischen Kontrollen und behandelten Tieren (Tabellen 5, 6). Die MFF-Werte lagen bei den gedipppten Tieren geringfügig höher als bei den besprühten Hähnchen.

### 3.3. Biophysikalische Parameter

### a) Temperatur der Hähnchen

Vor der Behandlung wiesen die Hähnchen im Mittel Temperaturen von +21,4 °C unter der Haut und +22,7 °C in der Brustmuskulatur auf. Nach der Behandlung lagen die Werte im Mittel bei +17,0 und +17,1 °C. Die besprühten Hähnchen waren noch etwas wärmer als die im Dippverfahren behandelten Tiere. Während der Lagerung betrug die Kerntemperatur (Mittelwerte) an den verschiedenen Meßtagen zwischen +2,2 und +5,0 °C.

### b) pH-Wert

Die Oberflächenbehandlung mit DL und SL führte in den ersten beiden Tagen zu einer pH-Wert-Absenkung der Haut, die jedoch nur bei den besprühten Tieren am ersten Tag in einer beachtenswerten Größenordnung von 0,76 pH-Einheiten lag. Ab der Hälfte der Lagerdauer war der pH-Wert der Haut der behandelten Tiere zumeist geringfügig und nicht signifikant höher als bei den Kontrolltieren. Entsprechendes gilt für den pH-Wert der Muskulatur während der gesamten Versuchsdauer (Tabellen 5, 6).

### c) Farbe

Es bestanden keine signifikanten Farbunterschiede zwischen den behandelten und den Kontrolltieren im L-, a- oder b-Wert (Tabellen 5, 6).

### d) Gewichtsverluste während des Fritierens

Die behandelten Tiere verloren beim Fritieren etwas weniger Gewicht als die Kontrolltiere. Bei Anwendung von Wasser bzw. Lösung zum Dippen verloren die Kontrolltiere 4,3% mehr Gewicht als die behandelten Tiere (32,3 bzw. 28,0%). Beim Sprühverfahren war der Unterschied minimal (30,4 bzw. 29,9%).

### 3.4. Sensorische Untersuchung

Die mit der DL sowie der SL behandelten Tiere zeigten eine stärkere Bräunung der Haut als die Kontrolltiere. Teilweise führte die deutlich hellere Hautfarbe der Kontrollen zu einer Beurteilung als Qualitätsmangel. Mit der geringeren Bräunung dieser Tiere ging eine weichere und weniger knusprige Hautkonsistenz einher (Tabelle 7). Das Fleisch der Kontrolltiere wurde insbesondere am 8. Tag als zäher, faseriger oder leimiger beurteilt (Tabelle 7).

Die Hähnchen aus dem Sprühverfahren wiesen nach der Lagerung bis zum 8. Tag unangenehmen Geruch auf. Bei den Kontrollen war dieser ammoniakalisch, bei einem der behandelten Tiere süßlich-anfaul.

### 3.5. Mikrobiologische Untersuchung

Der aerobe, mesophile Keimgehalt der Hähnchen am 1. Tag variierte innerhalb aller Versuchsgruppen von 3,3 x 10³ bis 1,3 x 10⁴ KbE/cm². Die Enterobakteriazeen- sowie die Staphylokokkenzahl lag meistens bei 10² KbE/cm².

Am 8. Tag schwankte die aerobe Gesamtkeimzahl innerhalb der Gruppen zwischen 8,5 x 10⁶ und 1,8 x 10⁸ KbE/cm². Die Gruppe der mit SL besprühten Tiere wies dagegen einheitlich niedrige Keimgehalte von 1,4 bis 6,0 x 10⁶ KbE/cm² auf. Die Enterobakteriazeenzahl lag am 8. Tag bei den gedippten Hähnchen mit 10⁵ bis 10⁶ KbE/cm² am höchsten, bei den Kontrollen schwankte sie zwischen 10² und 10⁶ KbE/cm². Bei den SL-besprühten Tieren war eine maximale Enterobateriazeenbelastung von 10⁵ KbE/cm² festzustellen, und die meisten Tiere wiesen nur bis 10³ KbE/cm² auf. Ein entsprechendes Gefälle bestand in der Staphylokokkenbelastung der verschiedenen Gruppen, wobei die höchste Keimzahl bei 2,3 x 10⁵ KbE/cm² lag.

Die Kontrolle des Keimgehaltes über den gesamten Zeitraum hinweg zeigte, daß eine Abnahme des Keimgehaltes zu beachten war, jedoch blieben insbesondere die Anteile der Keimgruppen innerhalb der Gesamtbelastung gleich. Eine "Maskierung" originärer Keimgehalte erfolgte durch beide Behandlungsverfahren danach nicht.

### 3.6. Histologie

Die Haut einschließlich der unterlagerten Muskulatur unterlag sowohl nach Vorbehandlung mit der 0,2 Gew-% Milchsäure enthaltenden Dipplösung (DL) als auch nach Sprühbehandlung mit der mit 1 Gew.-% Milchsäure angereicherten Lösung (SL) gegenüber den an Kontrolltieren erhobenen Befunden keinen erheblichen morphologischen Abweichungen innerhalb der beiden Untersuchungstage (1. bzw. 8. Tag).

Histologisch konnte festgestellt werden, daß die Vorbehandlung mit DL bzw. SL jedoch eine morphologisch erkennbare Verdichtung der äußeren Haut- und Serosadeckflächen nach sich zog, die ein vorzeitiges und unerwünschtes Austreten von interstitieller Flüssigkeit erschwerte. Eine epidermale Schutzschicht fehlte aufgrund der mechanischen Vorbehandlung der Schlachtkörper bei den Versuchs- und Kontrollgruppen meist vollständig.

Die Anwendung von Lösungen aus der 1 Gew.-%igen Stammlösung mit Zusatz von Milchsäure im Sprüh- oder Dippverfahren führte zu einer stärkeren Bräunung der Hähnchen beim Zubereiten. Dieser Fakt sowie die mehrfach festgestellte Zähigkeit des Fleisches der Kontrolltiere waren für die Bevorzugung der behandelten Tiere gegenüber den Kontrolltieren ausschlaggebend.

Aus mikrobiologischer Sicht erwies sich das Dippverfahren als ungünstiger als das Sprühverfahren. Während die mit SL besprühten Tiere nach Lagerung geringere Keimbelastungen als die Kontrolltiere aufwiesen, war es bei den mit DL behandelten Tieren zu einer stärkeren Vermehrung der Enterobakteriazeen und Staphylokokken als bei den Kontrollen gekommen. In der Dipplösung stieg durch die Behandlung der Keimgehalt, und eine Milchsäurekonzentration von 0,2 Gew.-% hatte keinen merklich keimreduzierenden Effekt, während die Milchsäurekonzentration von 1 Gew.-% in der Sprühlösung für die geringere Keimbelastung dieser Tiere verantwortlich ist. Eine Erhöhung der Milchsäurekonzentration in der Sprühlösung zur weiteren Steigerung des keimreduzierenden Effekts ist wegen geschmacklicher Veränderungen nicht ratsam.

**Tabelle 5**

| Unterschied zwischen den mit der Sprühlösung behandelten Hähnchen und den Kontrolltieren in Farbe, pH-Wert und Wassergehalt auf fettfreier Basis (MFF) | | | | | |
|---|---|---|---|---|---|
| | | Differenz (behandelte Tiere -Kontrolle) | | | |
| | | 1. Tag | 2. Tag | 4. Tag | 8. Tag |
| Farbe | L | -0,85 | -0,52 | -0,15 | -1,95 |
| | a | +0,55 | +0,72 | +0,57 | +0,58 |
| | b | +0,33 | +0,28 | +0,98 | -0,09 |
| pH-Wert | Haut | * -0,76 | -0,08 | +0,09 | +0,18 |
| | Brustmuskulatur | +0,20 | +0,18 | +0,07 | +0,01 |
| MFF (%) | | +0,2 | | | +0,9 |

| | | | | | |
|---|---|---|---|---|---|
| * signifikant (p < 0,05) | | | | | |

**Tabelle 6**

| Unterschied zwischen den mit Dipplösung behandelten Hähnchen und den Kontrolltieren in Farbe, pH-Wert und Wassergehalt auf fettfreier Basis (MFF) | | | | | |
|---|---|---|---|---|---|
| | | Differenz (behandelte Tiere -Kontrolle) | | | |
| | | 1. Tag | 2. Tag | 4. Tag | 8. Tag |
| Farbe | L | -0,95 | -1,88 | -1,78 | -2,31 |
| | a | -0,09 | +0,24 | +0,33 | +0,33 |
| | b | +0,32 | -0,49 | -0,31 | +0,26 |
| pH-Wert | Haut | * -0,17 | -0,04 | +0,05 | -0,05 |
| | Brustmuskulatur | +0,01 | +0,08 | +0,02 | +0,04 |
| MFF (%) | | -0,4 | | | -0,4 |

| | | | | | |
|---|---|---|---|---|---|
| * signifikant (p < 0,05) | | | | | |

**Tabelle 7**

| Sensorische Untersuchung an fritierten Hähnchen | | | | | | | | | |
|---|---|---|---|---|---|---|---|---|---|
| | | Dippen | | | | Sprühen | | | |
| | | 2. Tag | | 8. Tag | | 2. Tag | | 8. Tag | |
| | | K | B | K | B | K | B | K | B |
| Hautfarbe heller | | ++ | | ++ | | + | | +M | |
| Hautkonsistenz weich | | + | | + | | + | | + | |
| Fleischfarbe | hell | + | | | | | | | +M |
| | vergrauend | | | + | | | | | |
| Fleichkonsistenz zäh, faserig, leimig | | | | + | | + | | + | |
| Geruch und Geschsack ammoniakalisch süßlich | fresdartig | | | + | | | | | |
| | | | | | | | | +M | |
| | anfaul | | | | | | | | +M |
| Bevorzugung | | - | 75% | - | 80% | 5.3% | 73,3% | 35,7% | - |
| K: Kontrolle (mit Wasser gedippt bzw. besprüht) B: Behandelt mit Dipp- bzw. Sprühlösung M: zugleich als Mangel angesprochen | | | | | | | | | |

### Untersuchungen an Enten nach Besprühung mit der Gebrauchslösung

### 1. Ablauf der Versuche:

In einer dritten Untersuchungsreihe erfolgte die Behandlung der äußeren und inneren Körperoberfläche von Enten im Sprühverfahren. Der Sprühlösung wurde, wie schon bei der Behandlung der Hähnchen, Milchsäure zugesetzt. Die Sprühlösung wurde vor und nach der Behandlung der Tiere mikrobiologisch untersucht.

Das Untersuchungsmaterial bestand aus 40 Enten in 2 Untersuchungsphasen. 20 Tiere wurden mit SL (behandelte Tiere), 20 Kontrolltiere mit Wasser besprüht.

Es fanden Messungen der Temperatur, der Farbe und des pH-Wertes, die Bestimmung des Wassergehaltes sowie mikrobiologische, sensorische und histologische Untersuchungen an den in Tabelle 8 angegebenen Tagen statt.

**Tabelle 8**

| Untersuchungen an Enten nach der Behandlung der Hautoberflächen mit der 1 Gew.-%igen Stammlösung enthaltend 1 Gew.-% Milchsäure. | | | | | |
|---|---|---|---|---|---|
| Untersuchung | Anzahl Tiere/Gruppe (n) | Untersuchungstage | | | |
| | | 1 | 2 | 4 | 8 |
| Temperatur | 6 | x | x | x | x |
| Farbe | 6 | x | x | x | x |
| pH-Wert | 6 | x | x | x | x |
| MFF | 6 | x | | | x |
| Sensorik | 4 | | x | | x |
| Mikrobiologie | 6 | x | | | x |
| Histologie | 6 | x | | | x |

### 2. Probenmaterial und Methoden:

Die Enten stammten aus einer Geflügelschlachterei, es handelte sich um Flugenten mit einem Schlachtgewicht zwischen 1,4 und 2,1 kg. Bei der Zuordnung zu den verschiedenen Untersuchungsgruppen wurde auf Vergleichbarkeit des Gewichts geachtet.

### Lösungen, Behandlung der Tierkörper, Lagerung und Desinfektion

Die Sprühlösung (SL) bestand aus der 1 Gew.-%igen Stammlösung enthaltend 1 Gew.-% Milchsäure.

Zum Besprühen diente ein Spritzgerät, der Sprühdruck betrug 0,8 bar, die Durchflußmenge 6 l/min und die Sprühdauer 30 sec.

Die Tiere lagerten in (sterilen) Plastikbeuteln in einem Kühlschrank bei Lufttemperatur von maximal +4 °C bis zu 8. Tag.

Chemische Bestimmung des Wassergehalts auf fettfreier Basis (MFF) biophysikalische und histologische Untersuchungen wurden analog zu den Hähnchen durchgeführt.

Für die sensorische Untersuchung wurden die Enten paarweise bei +140 °C fritiert, die Zubereitungszeit betrug 40 Minuten. Die Untersuchung stellte eine paarweise Unterschiedsprüfung dar. Es wurde zusätzlich erfaßt, ob einzelne Merkmale als Qualitätsmangel zu beurteilen waren. Bei Feststellung von Unterschieden oder Mängeln wurde deren Ausprägung mit "gering" (1), "mäßig" (2) oder "stark" (3) bewertet. Zur Standardisierung erhielten die Prüfer ein entsprechendes Prüfschema.

In die Gesamtbewertung in Tabelle 10 gehen Merkmale ein, bei denen die Berechnung des Mittelwertes mindestens 0,5 ergab, d.h. bei Feststellung eines gering ausgeprägten Merkmals mindestens die Hälfte der Prüfer diese Beurteilung vorgenommen haben.

Zur Bestimmung des Keimgehaltes der äußeren und inneren Körperoberfläche wurden 50 g Schenkel- und Brusthaut sowie Serosa im Bauchwand- und Kloakenbereich entnommen und als Poolprobe bearbeitet. Entsprechend erfolgte die Probennahme für die Salmonellenanreicherung.

Die Methoden und Medien zur Ermittlung der aeroben, mesophilen Gesamtkeimzahl, der Enterobakteriazeen, der Staphylokokken und St. aureus sowie der Salmonellen entsprechen den bei Hähnchen beschriebenen Verfahren.

### Ergebnisse

### 3.1. Sprühlösung

Der pH-Wert der Sprühlösungen betrug 2,97 bzw. 3,06.

Der Keimgehalt der Lösungen vor und nach Behandlung der Enten lag maximal bei 4,8 x 10¹ KbE/ml. E.coli, coliforme Keime, Pseudomonas aeruginosa und Enterokokken waren in 100 ml sowie sulfitreduzierende, sporenbildende Anaerobier in 20 ml nicht nachweisbar.

### 3.2. Wassergehalt auf fettfreier Basis (MFF)

Hinsichtlich dem Wassergehalt auf fettfreier Basis (MFF), des pH-Wertes der Haut und in der Muskulatur, der L-, a- und b-Werte (Tabelle 9), des Gewichtsverlusts beim Fritieren sowie der sensorischen Qualität (Tabelle 10) erwiesen sich die behandelten Tiere den Kontrolltieren gegenüber als gleichwertig.

### 3.3. Mikrobiologische Untersuchungen

Der aerobe, mesophile Keimgehalt der Enten am 1. Tag variierte innerhalb der beiden Gruppen von 2,2 x 10⁴ bis 1,2 x 10⁶ KbE/g. Die Enterobakteriazeen- sowie die Staphylokokkenzahl lag zwischen 1,9 x 10² und 8,1 x 10⁴ KbE/g. Dabei schwankten die Keimgehalte im Mittel zwischen den beiden Gruppen um weniger als eine halbe Zehnerpotenz.

Am 8. Tag lag die aerobe Gesamtkeimzahl bei den Kontrolltieren zwischen 1,0 x 10⁷ und 2,0 x 10⁹ KbE/g. Die Gruppe der mit SL besprühten Tiere wies niedrigere Keimgehalte von 5,2 x 10⁵ bis 4,3 x 10⁸ KbE/g auf. Die Enterobakteriazeenzahl schwankte am 8. Tag bei den Kontrollen zwischen 2,1 x 10⁴ und 2,8 x 10⁷ KbE/g, bei den besprühten Tieren bewegte sie sich zwischen 3,8 x 10³ und 4,1 x 10⁶ KbE/g. Im Mittel war sowohl die Gesamtkeimzahl als auch die Enterobakteriazeenzahl bei den besprühten Tieren um eine Zehnerpotenz niedriger als bei der Kontrollgruppe. Bei beiden Gruppen wurden Staphylokokkengehalte zwischen 1,5 x 10³ und 4,6 x 10⁵ KbE/g ermittelt.

Die Enten der ersten Phase wiesen eine höhere Belastung mit Staphylococcus aureus (bis 1,1 x 10⁴ KbE/g) als Enten der 2. Phase auf (maximal 2,0 x 10² KbE/g). Der Nachweis auf Anwesenheit von Salmonellen in 50 g Haut war ebenfalls nur in der ersten Phase zu führen, und zwar jeweils bei einem Tier pro Gruppe.

### 3.4. Histologie

Histologisch wies die Haut der Schenkeloberfläche wie auch der seitlichen Bauchwand von Enten nach Besprühung mit der 1 Gew.-%igen Stammlösung enthaltend 1 Gew.-% Milchsäure nach einer Lagerdauer von 8 Tagen nur geringfügige Abweichungen in der Struktur gegenüber vergleichbaren Kontrolltieren vom 1. Versuchstag auf. Dagegen waren strukturelle Veränderungen bei nicht behandelten Enten und einer Lagerdauer von 8 Tagen augenfällig.

Tiefere Schichten der Haut und der Unterhaut blieben von einer Vorbehandlung unbeeinflußt. Fettzellen und Muskulatur waren nach 8-tägiger Lagerung in der Versuchs- wie in der Kontrollgruppe in gleicher Weise verändert. Die Fettvakuolen erschienen kollabiert, die Muskelfasergrenzen und das Endo- bzw. Perimysium abgelöst.

Das Besprühen von Enten mit einer Lösung aus der 1 Gew.-%igen Stammlösung enthaltend 1 Gew.-% Milchsäure führte zu einer deutlichen Absenkung des pH-Wertes der Haut am ersten und in geringerem Umfang auch am zweiten Tag. Dieser Effekt war wesentlich deutlicher ausgeprägt als bei den Hähnchen. Trotz des niedrigen pH-Wertes trat keine stärkere Ausprägung saurer Geruchs- oder Geschmackskomponenten auf.

### 3.5. Sensorische Untersuchung

Durch die Behandlung wurde die sensorische Qualität der Enten geringfügig positiv in der Gesamtbewertung beeinflußt. Eine stärkere Bräunung der behandelten Tiere konnte mehrheitlich am 8. Tag festgestellt werden. Dieser Effekt trat im Gegensatz zu den Hähnchen nicht am 1. Tag auf.

Der Oberflächenkeimgehalt nach 8-tägiger Lagerung wurde durch die Behandlung reduziert. Dem Oberflächenkeimgehalt ist beim Geflügel eine um so größere Aufmerksamkeit zu widmen, da es beim Geflügel durch die Beschädigungen der Haut beim Brühen und Rupfen zu einem Eindringen der Keime bis ins Fleisch kommt und Geflügel daher verglichen mit den anderen Schlachttierarten einen verhältnismäßig hohen Tiefenkeimgehalt aufweist.

Insgesamt führt das Besprühen von Enten mit SL zu einer besseren Bewertung in mikrobiologischer und sensorischer Hinsicht. Dabei ist die Beeinflussung der sensorischen Qualität geringer als bei den Hähnchen.

**Tabelle 9**

| Unterschied zwischen den mit der Sprühlösung behandelten Enten und den Kontrolltieren in Farbe, pH-Wert und Wassergehalt auf fettfreier Basis (MFF) | | | | | |
|---|---|---|---|---|---|
| | | Differenz (behandelte Tiere -Kontrolle) | | | |
| | | 1. Tag | 2. Tag | 4. Tag | 8. Tag |
| Farbe | L | -0,24 | -0,63 | -0,37 | -0,45 |
| | a | +0,65 | -0,06 | -0,46 | +0,36 |
| | b | +0,66 | +1,08 | +0,48 | +0,82 |
| pH-Wert | Haut | * -2,08 | *-0,60 | -0,16 | -0,17 |
| | Brustmuskulatur | 0,00 | +0,01 | +0,05 | -0,03 |
| MFF (%) | | +1,2 | | | -0,3 |

| | | | | | |
|---|---|---|---|---|---|
| * signifikant (p < 0,05) | | | | | |

**Tabelle 10**

| Sensorische Untersuchung von fritierten Enten | | | | |
|---|---|---|---|---|
| | 2. Tag | | 8. Tag | |
| | K | B | K | B |
| Hautfarbe dunkler | | | | + |
| Geruch und Geschmack fischig/ölig | | | M | M |
| Bevorzugung | 17,1% | 37,1% | 18,2% | 30,3% |
| K: Kontrolle (mit Wasser besprüht) B: Behandelt mit Sprühlösung M: als Mangel angesprochen | | | | |

## Patentansprüche

1. Mittel zur Steigerung der Haltbarkeit von Schlachttierkörpern und Schlachttierkörperteilen umfassend eine wässrige Lösung von
(a) 0,1 bis 5,0 Gew.-% einer Wirkstoffstammzusammensetzung umfassend als Bestandteile wenigstens einen Zucker, wenigstens ein anorganisches Phosphat, wenigstens eine Verbindung, die ausgewählt ist aus Ascorbinsäure oder Isoascorbinsäure oder deren anorganischen Salzen, Zitronensäure, Sorbinsäure oder deren Gemischen und
(b) 0,1 bis 5,0 Gew.-% eines Aktivators, der ausgewählt ist aus Essig- und Milchsäure,
jeweils bezogen auf die Gesamtmenge der wässrigen Lösung.

2. Mittel nach Anspruch 1, dadurch gekennzeichnet, daß es zusätzlich (c) Hilfs- und/oder Zusatzstoffe enthält.

3. Mittel nach Anspruch 1 oder 2, dadurch gekennzeichnet, daß sich die Wirkstoffstammzusammensetzung zusammensetzt aus 40 bis 70 Gew.-Teilen Zucker, 15 bis 35 Gew.-Teilen anorganischem Phosphat und 0,5 bis 10 Gew.-Teilen einer Verbindung, die ausgewählt ist aus Ascorbinsäure oder Isoascorbinsäure oder deren anorganischen Salzen, Zitronensäure, Sorbinsäure oder deren Gemischen.

4. Mittel nach Anspruch 3, dadurch gekennzeichnet, daß die Wirkstoffstammzusammensetzung zusätzlich noch 0,1 bis 3 Gew.-Teile eines Acetoglycerids enthält.

5. Mittel nach Anspruch 4, dadurch gekennzeichnet, daß sich die Wirkstoffstammzusammensetzung zusammensetzt aus
49,1 Gew.-Teilen Dextrose,
9,5 Gew.-Teilen Oligosaccharide,
5,1 Gew.-Teilen Maltose,
3,9 Gew.-Teilen Maltotriose,
23,0 Gew.-Teilen Natriumtripolyphosphat,
2,9 Gew.-Teilen Kaliumpolymetaphosphat,
2,9 Gew.-Teilen Tetrakaliumdiphosphat,
2,5 Gew.-Teilen Ascorbinsäure,
0,5 Gew.-Teilen Zitronensäure,
0,5 Gew.-Teilen Acetoglyceriden.

6. Verwendung des Mittels, wie in einem oder mehreren der Ansprüche 1 bis 5 definiert, zur Steigerung der Haltbarkeit von Schlachttierkörpern und Schlachttierkörperteilen durch postmortale äußere Applikation oder postmortale intravasale Injektion.

7. Verwendung nach Anspruch 6 zur Steigerung der Haltbarkeit von Körpern oder Körperteilen von monogastrischen Tieren, Tieren mit Zelluloseverdauung im Pansen, Geflügel, Speisefischen oder von gehacktem Rind-, Kalb-, Schweine- oder Geflügelfleisch.

8. Verwendung des Mittels, wie in einem oder mehreren der Ansprüche 1 bis 5 definiert, zur Steigerung der Haltbarkeit von Hamburger Petties.

## Claims

1. An agent for enhancing the keeping quality of bodies of slaughtered animals and of parts of bodies of slaughtered animals comprising an aqueous solution of
(a) from 0.1 to 5.0% by weight of a stock composition of active ingredients which comprises, as constituents, at least one sugar, at least one inorganic phosphate, at least one compound selected from ascorbic acid or isoascorbic acid or the inorganic salts thereof, citric acid, sorbic acid or mixtures thereof, and
(b) from 0.1 to 5.0% by weight of an activator selected from acetic and lactic acids,
each relative to the total amount of the aqueous solution.

2. The agent according to claim 1, characterized in that it additionally contains (c) auxiliary materials and/or additives.

3. The agent according to claims 1 or 2, characterized in that the stock composition of active ingredients is composed of from 40 to 70 parts by weight of sugar, from 15 to 35 parts by weight of inorganic phosphate, and from 0.5 to 10 parts by weight of the compound selected from ascorbic acid or isoascorbic acid or the inorganic salts thereof, citric acid, sorbic acid or mixtures thereof.

4. The agent according to claim 3, characterized in that the stock composition of active ingredients additionally contains from 0.1 to 3 parts by weight of an acetoglyceride.

5. The agent according to claim 4, characterized in that the stock composition of active ingredients is composed of
49.1 parts by weight of dextrose,
9.5 parts by weight of oligosaccharides,
5.1 parts by weight of maltose,
3.9 parts by weight of maltotriose,
23.0 parts by weight of sodium tripolyphosphate,
2.9 parts by weight of potassium polymetaphosphate,
2.9 parts by weight of tetrapotassium diphosphate,
2.5 parts by weight of ascorbic acid,
0.5 parts by weight of citric acid,
0.5 parts by weight of acetoglycerides.

6. Use of the agent as defined in any one or more of claims 1 to 5 for enhancing the keeping quality of bodies or body parts of slaughtered animals by post-mortal external application or post-mortal intravascular injection.

7. Use according to claim 6 for enhancing the keeping quality of bodies or body parts of monogastric animals, animals with cellulose digestion in the rumen, poultry, edible fish or of minced beef, veal, pork and poultry meat.

8. Use of the agent as defined in any one or more of claims 1 to 5 for enhancing the keeping quality of Hamburger patties.

## Revendications

1. Agent permettant d'augmenter la conservabilité de corps ou carcasses d'animaux d'abattoir et de parties de corps ou carcasses d'animaux d'abattoir, cet agent comprenant une solution aqueuse de :
(a) 0,1 à 5,0% en poids d'une composition de substances actives, comprenant comme constituants au moins un sucre, au moins un phosphate minéral, au moins un composé choisi parmi l'acide ascorbique ou l'acide isoascorbique ou leurs sels minéraux, l'acide citrique, l'acide sorbique, ou leurs mélanges, et
(b) 0,1 à 5,0% en poids d'un activateur, qui est choisi parmi l'acide acétique et l'acide lactique,
chaque proportion étant rapportée à la quantité totale de la solution aqueuse.

2. Agent selon la revendication 1, caractérisé en ce qu'il contient en outre (c) des adjuvants et/ou des additifs.

3. Agent selon la revendication 1 ou 2, caractérisé en ce que la composition des substances actives se compose de 40 à 70 parties en poids de sucre, 15 à 35 parties en poids de phosphate minéral et 0,5 à 10 parties en poids d'un composé choisi parmi l'acide ascorbique ou l'acide isoascorbique ou leurs sels minéraux, l'acide citrique, l'acide sorbique ou leurs mélanges.

4. Agent selon la revendication 3, caractérisé en ce que la composition des substances actives contient en outre encore 0,1 à 3 parties en poids d'un acétoglycéride.

5. Agent selon la revendication 4, caractérisé en ce que la composition des substances actives se compose de :
49,1 parties en poids de dextrose,
9,5 parties en poids d'oligosaccharides,
5,1 parties en poids de maltose,
3,9 parties en poids de maltotriose,
23,0 parties en poids de tripolyphosphate de sodium,
2,9 parties en poids de polymétaphosphate de potassium,
2,9 parties en poids de diphosphate tétrapotassique,
2,5 parties en poids d'acide ascorbique,
0,5 partie en poids d'acide citrique,
0,5 partie en poids d'acétoglycérides.

6. Utilisation de l'agent, tel que défini dans une ou plusieurs des revendications 1 à 5, pour augmenter la conservabilité de corps ou carcasses d'animaux d'abattoirs et de parties de corps ou carcasses d'animaux d'abattoir, par application externe postmortem ou injection intravasculaire postmortem (après la mort).

7. Utilisation selon la revendication 6, pour augmenter la conservabilité de corps ou carcasses ou de parties de corps ou de carcasses d'animaux monogastriques, d'animaux capables de digérer la cellulose dans leur panse, de volailles, de poissons comestibles ou de chair ou viande hachée de boeuf, de veau, de porc ou de volaille.

8. Utilisation de l'agent, tel que défini dans une ou plusieurs des revendications 1 à 5, pour augmenter la conservabilité de petits morceaux de viande ou de saucisse pour hamburger.
